# EUROPÄISCHE PATENTSCHRIFT

(11) **EP 1 733 164 B1**
(45) Veröffentlichungstag und Bekanntmachung des Hinweises auf die Patenterteilung: **12.03.2008**
(21) Anmeldenummer: 05731051.8
(22) Anmeldetag: 31.03.2005
(51) Int. Cl.: F16L 37/088, F16L 37/084

(54) **STECKVERBINDUNG MIT WINKELARRETIERUNG**
PLUG-IN CONNECTION PROVIDED WITH AN ANGLE-LOCKING DEVICE
RACCORD ENFICHABLE A BLOCAGE ANGULAIRE

(30) Priorität: 03.04.2004 DE 102004016599
(43) Veröffentlichungstag der Anmeldung: 20.12.2006
(73) Patentinhaber: Henn GmbH & Co.KG, 6850 Dornbirn (AT)
(72) Erfinder: HARTMANN, Harald, A-6850 Dornbirn (AT)
(74) Vertreter: Riebling, Peter
(86) Internationale Anmeldenummer: PCT/EP2005/003393
(87) Internationale Veröffentlichungsnummer: WO 2005/095842

(56) Entgegenhaltungen:
- EP-A- 0 559 505
- DE-A1- 10 231 114
- DE-A1- 10 347 928
- DE-B3- 10 307 921

## Beschreibung

Die Erfindung betrifft eine Steckverbindung mit Winkelarretierung nach dem Oberbegriff des Patentanspruchs 1.

Mit der auf den gleichen Anmelder zurückgehenden Patentanmeldung DE 102 311 114 wurde eine Steckverbindung mit Montagehilfe beschrieben, bei der eine winkelgerechte Zusammenführung eines Steckteils zu einem Stutzen ermöglicht werden soll.

Bei der Steckverbindung aus der DE 102 311 114 müssen zur Herstellung einer Winkelarretierung am Steckteil radial auswärts gerichtete, an der Außenhülse befestigte separate Teile befestigt werden, die beim Herstellen der Steckverbindung (beim axialen Zusammenführen von Stutzen und Steckteil) in zugeordnete Aufnahme am Stutzen eingreifen, um so ein winkelgerechtes Zusammenführen der Steckverbindung zu ermöglichen.

Die Herstellung einer solchen Winkelarretierung ist jedoch außerordentlich aufwendig und erhöht die Herstellungskosten der Steckverbindung insgesamt. Außerdem besteht die Gefahr, dass separat am Steckteil angeordnete Teile wieder abfallen können oder nicht richtig befestigt sind, was zu einer zusätzlichen Betriebsunsicherheit führt.

Es ist ebenfalls bekannt, am Steckteil Nasen anzuordnen, die an eine Nut im Stutzen eingeführt werden. Dies bedingt allerdings, dass - wenn bei bestimmten Steckverbindungen eine Winkelarretierung nicht gewünscht wird - dass der Stecker in zwei verschiedenen Ausführungsformen hergestellt werden muss, nämlich einmal mit den dort befestigten Nasen und zum anderen ohne diese Nasen. Damit ist eine universelle Anwendbarkeit einer solchen Steckverbindung, die wahlweise mit oder ohne Winkelarretierung hergestellt werden könnte, nicht gegeben.

Es ist ferner bekannt, im Stutzen, der in den Innenraum des Steckteils eingeführt wird, eine Ausbuchtung anzubringen, die in eine Nut am Stecker eingeführt wird.

Dies ist aber bei vielen Fertigungsmethoden für die Herstellung eines solchen Stutzens nur aufwendig realisierbar.

Es ist im übrigen bekannt, sogenannte Zapfen am Außenumfang des Stutzens anzuordnen und zugeordnete Ausklinkungen im Außenumfang des Steckteils. Damit ist aber der Nachteil verbunden, dass bei Herstellung der Steckverbindung gerade das Steckteil an dem Außenumfang mit der Hand umfasst werden muss und hierbei Unfallgefahr besteht. Die Ausklinkungen am Außenumfang des Steckteils sind meist scharfkantig, und bei der Herstellung der Steckverbindung besteht dann Schnittgefahr, weil die Hand in diese Ausklinkungen eingreifen kann.

Mit der Druckschrift DE 103 07 921 B3 wird eine Steckverbindungseinrichtung für den Anschluss von vorzugsweise Rohr- und Schlauchleitungen von Fluide, Dampf oder Luft mit einem Kupplungsstecker und einem Kupplungsgehäuse offenbart, wobei das Kupplungsgehäuse auf den Kupplungsstecker aufschiebbar ist und an seinem Außenumfang mindestens einen Durchbruch aufweist, welcher eine Führungseinrichtung bildet, in welcher eine Erhebung des Kupplungssteckers eingreift und abstützt, so dass das Kupplungsgehäuse und -Stecker sich miteinander drehfest verbinden und das Kupplungsgehäuse mittels einer beweglichen Verriegelungseinrichtung, welche das Kupplungsgehäuse zumindest abschnittsweise umgreift, mit dem Kupplungsstecker verriegelbar ist.

Diese Erfindung weist den wesentlichen Nachteil auf, dass die hier beschriebene Steckverbindung am Rohrstutzen einen Durchbruch aufweist, welcher mit einem Teil des Sicherungsmittels durchgriffen wird, wobei die Ausbuchtung einer Erhebung der Außenhülse zugeordnet ist, mit der das Sicherungsmittel zusammenwirkt, wobei die vorbenannte Konstruktion keine einfach herstellbare Winkelarretierung für eine derartige Steckverbindung ausbildet.

Mit der auf den gleichen Anmelder zurückgehende Druckschrift DE 103 47 928 A1 wird eine Steckverbindung mit einer Winkelpositionierung zwischen einem Stutzen und einem mit diesem verastbaren Stecker offenbart, welche eine in Einsteckrichtung gerichtete Verschiebeführung aufweist, welche mindestens eine definierte Steck- oder Verdrehlage zwischen Stecker und Stutzen definiert und eine Verdrehsicherung ausbildet.

Diese Erfindung weist den Nachteil auf, dass die Verdrehsicherung eine relativ starre Einbaulage des am Stecker befestigten Schlauches mit dem Stutzen ausbildet und die für die Verdrehsicherung konstruktive Herstellung ebenfalls relativ aufwendig ist.

Mit der Druckschrift EP 0 559 505 A1 wird eine Vorrichtung zum Verbinden eines Schlauchendes mit dem Ende eines starren Rohres offenbart, welche das Schlauchenede mit Hilfe von Halteelementen und Dichtungselementen abdichtend am starren Rohrende fixiert, wobei das Schlauchende zwischen zwei starren rohrförmigen Elementen festgeklemmt ist, wobei das äußere rohrförmige Element an seinen Enden einen nach außen vorstehenden Teil aufweist, der mit einer Anschlagfläche des Rohrendes zusammenwirkt und eine Positionierung des Schlauchendes im Rohrende sicherstellt und einen am anderen Ende einen nach innen vorstehenden Teil aufweist, in dessen Verlängerung ein radialer Abschnitt, der eine Wand einer Vertiefung zur Aufnahme einer Dichtung ausbildet, und ein axialer Abschnitt, der den Boden der Vertiefung zur Aufnahme der Dichtunge bildet und durch Pressung auf einen inneren rohrförmigen Elementes aufgeklemmt ist, wobei das innere rohrförmige Element einen radialen Abschnitt aufweist, der die andere Wand der Vertiefung zur Aufnahme der Dichtung ausbildet.

Diese Erfindung weist den Nachteil auf, dass die konstruktive Herstellung der zur Positionierung notwendigen Bauteile relativ aufwendig und kostenintensiv ist.

Der Erfindung liegt deshalb die Aufgabe zugrunde, eine Steckverbindung der eingangs genannten Art so weiterzubilden, dass eine Winkelarretierung mit besonders einfachen Mitteln möglich ist, dass eine Unfallgefahr bei der Betätigung der Steckverbindung vermieden wird und dass wahlweise die Steckverbindung mit und ohne Winkelarretierung ohne großen Umstellungsaufwand herstellbar ist.

Zur Lösung der gestellten Aufgabe ist die Erfindung durch die technische Lehre des Anspruchs 1 gekennzeichnet. Wesentliches Merkmal der Erfindung ist, dass ausgehend von einer Steckverbindung, bei der der Stutzen in den Innenraum des Steckteils eingesteckt ist, der Stutzen an seiner in Steckrichtung vorne liegenden Stirnseite in axiale Richtung weisende Führungsöffnungen aufweist, die in axialer Richtung geöffnet sind und dass ferner am Steckteil in axialem Abstand zu der Rastverbindung am Steckteil mehrere radial einwärts in die lichte Stecköffnung hinein ragende Führungslappen angeordnet sind.

Mit der gegebenen technischen Lehre ergibt sich der Vorteil, dass die Herstellung solcher Führungslappen nun besonders einfach ist.

Betrachtet man das Steckteil als Büchse mit einem geschlossenen Boden, dann wären die Führungslappen im Bereich des Bodens anzuordnen.

Zur Herstellung der Führungslappen wird somit einfach der Boden der Innenhülse ausgestanzt, und zwar in der Weise, dass die Führungslappen übrig bleiben. Dadurch ergibt sich eine besonders einfache Herstellung, und die Führungslappen ragen somit in die lichte Weite der Stecköffnung des Steckteils hinein. Es besteht somit keine Unfallgefahr mehr, weil der Außenumfang des Steckteils von Ausklinkungen, Ausbuchtungen oder sonstigen unfallgefährlichen und hervorstehenden Teilen befreit ist.

Auch ist der Stutzen besonders einfach herstellbar, denn es genügt lediglich im Bereich der vorderen Stirnseite mehrere Führungsöffnungen anzuordnen, die mit den in die lichte Weite der Stecköffnung hineinragenden Führungslappen am Steckteil zusammenwirken.

Wichtig bei der Herstellung der Steckverbindung ist, dass die am Steckteil angeordneten Führungslappen mindestens in teilweisen Eingriff mit den Führungsöffnungen am Stutzen gelangen, bevor die Steckverbindung selbst zwischen dem Steckteil und dem Stutzen hergestellt ist.

Auf diese Weise wird eine winkelgerechte Montage der Steckverbindung gewährleistet.

Nachdem der "Boden" des Steckteils in Form einer Kontur gelocht wird und so ausgestanzt wird, dass nur noch die radial einwärts gerichteten Führungslappen stehen bleiben, ist es in besonders einfacher Weise möglich, auch unterschiedlich geformte Lappen herauszustanzen. Hierbei können einige Lappen größer und andere kleiner gemacht werden und dementsprechend auch die zugeordneten Führungsöffnungen am Stutzen angepasst werden, um so eine winkelgerechte, eindeutige Zusammenführung der Steckverbindung zu ermöglichen.

Werden jedoch alle Führungslappen gleich ausgebildet und dementsprechend auch alle Führungsöffnungen im Stutzen, kann die Steckverbindung in jeder beliebigen Winkellage zusammengesteckt werden, jedoch nur dann, wenn die Führungslappen am Steckteil in die Führungsöffnungen am Stutzen eingreifen. Damit kann die Steckverbindung lediglich beispielsweise in Wnkelstellungen von 45, 60 oder 90° zusammengesteckt werden.

Es ergibt sich auch der Vorteil, dass es sehr einfach ist, eine solche Steckverbindung von einer winkelgerechten Arretierung in eine winkellose Arretierung umzuwandeln. Es müssen dazu nur einfach die Führungslappen aus der lichten Weite der Stecköffnung herausgebogen werden, um so zu ermöglichen, dass die Steckverbindung in jeder beliebigen Verdrehlage zusammengeführt werden kann. Ebenso ist es möglich, dass bei gleichbleibend stehenden Führungslappen einfach der Stutzen um seinen vorderen Stirnseitenbereich in axialer Richtung gekürzt wird, so dass sich praktisch eine umlaufende, freiliegende Führungsöffnung ergibt, die damit keinerlei Führungsfunktion mehr für die gegenüberliegenden Lappen aufweist.

Da das Lochen eines Bodens mit einem Stanzwerkzeug nur aufgrund eines speziellen Konturstempels notwendig ist, ist kein zusätzlicher Werkzeug- und Maschinenaufwand zur Herstellung der Winkelarretierung erforderlich.

Das Steckteil kann immer gleich ausgeführt werden, ob die Arretierung nun genutzt wird oder nicht. Dies hängt allein vom Stutzen ab, wie vorstehend angegeben wurde.

Mit der DE 102 311 114 wird ebenfalls offenbart, dass durch die Ausbildung der Toleranz der Führungsöffnung am Stutzen auch das Winkelspiel der Winkelarretierung sehr leicht bestimmt werden kann. Damit kann auch die Einführlänge und der Einführkonus (Konus der Einführschräge) vom jeweiligen Hersteller des Stutzens bestimmt werden, wenn erfindungsgemäß lediglich der Stecker hergestellt werden soll.

Der Stutzen ist mit den eingebrachten Führungsöffnungen so einfach herzustellen, dass eine Ausführung mit Winkelarretierungen in allen denkbaren Materialien ohne besonderen Mehraufwand möglich ist. Er kann demzufolge aus Metall (Blech oder Guss), aus Kunststoff- oder Metall-Kunststoffverbundkörpern hergestellt werden.

Im Folgenden wird die Erfindung anhand von lediglich einen Ausführungsweg darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
- Figur 1:: perspektivische Ansicht der Steckverbindung mit Winkelarretierung auseinandergezogener Darstellung;
- Figur 2:: die verrastete Steckverbindung nach Figur 1.

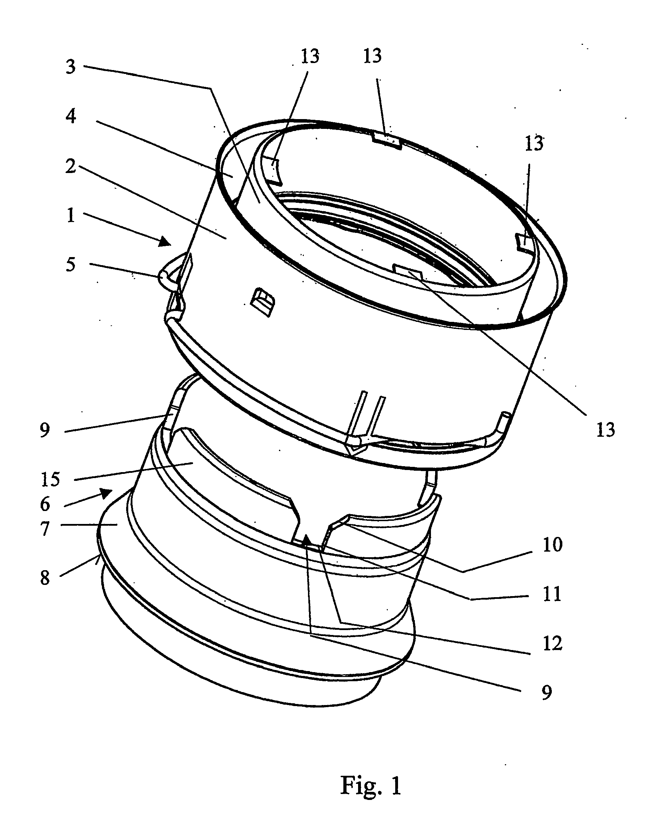

In Figur 1 ist dargestellt, dass ein Steckteil 1 aus einer Außenhülse 2 und einer werkstoffeinstückig damit verbundenen Innenhülse 3 besteht. Hierauf ist die Erfindung jedoch nicht beschränkt. Das Steckteil kann auch in jeder beliebigen anderen Ausgestaltung vorgesehen sein, insbesondere kann die Außenhülse 2 vollständig entfallen.

Im Zwischenraum zwischen der Außenhülse 2 und der Innenhülse 3 ist ein ringsum laufender Aufnahmeraum 4 vorgesehen, in dem in axialer Richtung ein Schlauchende eingesteckt wird, welches dort dichtend festgelegt wird.

Die Erfindung kann jedoch auch vorsehen, dass das Steckteil werkstoffeinstückig mit dem daran anschließenden Schlauch ausgebildet ist.

Zur Herstellung der Rastverbindung trägt das Steckteil 1 im vorderen Bereich eine Rastfeder 5, die mit mehreren Abbiegungen in die lichte Weite des Steckteils 1 hinein ragt.

In den Innenraum des Steckteils 1 ist ein Stutzen 6 einsteckbar, der an seinem vorderen Ende im Bereich eines Ringbundes 15 mehrere am Umfang verteilt angeordnete Führungsöffnungen 9 ausbildet.

Jede Führungsöffnung 9 ist in axialer Richtung nach vorne hin geöffnet und wird dort durch schräg zulaufende Einführschrägen 10 begrenzt, die in in axialer Richtung parallele Führungskanten 11 einlaufen, die ihrerseits durch eine senkrecht sich daran anschließende Bodenfläche 12 abgeschlossen sind.

Die Rastverbindung aufseiten des Stutzens besteht aus einer umlaufenden, am Mantel des Stutzens 6 radial auswärts gerichteter, Rastschräge 7, die eine steil abfallende Rastkante 8 ausbildet.

Wichtig ist nun, dass am Steckteil 1 (hier im Ausführungsbeispiel im Bereich der Innenhülse 3) im "Bodenbereich" radial einwärts in die Stecköffnung gerichtete Führungslappen 13 ausgebildet sind, die aus dem Material der Innenhülse 3 herausgebildet sind. Sie sind werkstoffeinstückig mit dem Material der Innenhülse 3 verbunden und sind - wie vorhin angegeben - durch eine Konturstanzung aus dem vorher vorhandenen Boden der Innenhülse 3 herausgearbeitet worden.

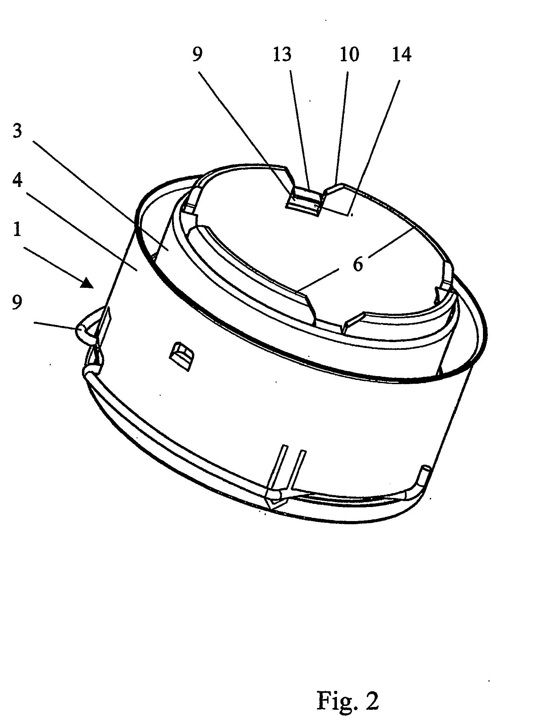

Zur Herstellung der Steckverbindung wird somit der Stutzen 6 in die lichte Weite des Steckteils 1 eingeführt, so dass zunächst die Führungslappen 13 in Eingriff mit den Einführschrägen 10 am Stutzen 6 gelangen. Sobald dieser Zustand erreicht wurde, ist eine Winkelverdrehung zwischen Stutzen 6 und Steckteil 1 nicht mehr möglich. Mit weiterem Einschieben in axialer Richtung greifen somit dann die Führungslappen 13 in den Bereich der enger tolerierten Führungskanten 11 ein und schließlich rastet dann die Rastfeder 9 am Steckteil 1 über die Rastkante 8 am Stutzen 6 auf, wobei die Winkelarretierung aufrecht erhalten bleibt, wie dies in Figur 2 dargestellt ist.

Die Figur 2 zeigt eine relativ enge Tolerierung der Winkelarretierung, was bedeutet, dass die Umfangslänge der Lappen 13 etwa dem Abstand zwischen den Führungskanten 11 entspricht. Es können jedoch in diesem Bereich weite Spielräume vorgesehen werden.

Ebenso ist erkennbar, dass die Führungslappen 13 in axialer Richtung noch einen Freiraum 14 bis zur Bodenfläche 12 der Führungsöffnung 9 aufweisen, um so einen gewissen Überhub der Steckverbindung zu ermöglichen. Damit soll für den Bediener sichergestellt werden, dass die Steckverbindung über ihre Raststellung hinaus rastet, was durch den Freiraum 14 bestimmt wird.

Soll nun auf die Winkelarretierung verzichtet werden, dann ist es in einer ersten Ausführungsform vorgesehen, dass der Ringbund 15 insgesamt entfernt wird, wodurch insgesamt die Führungsöffnung 9 frei umlaufend wird.

In einer anderen Ausgestaltung kann es vorgesehen werden, dass mit einer Zange die Führungslappen 13 in axialer Richtung nach hinten herausgebogen werden, so dass sie ebenfalls nicht mehr in Eingriff mit den Führungsöffnungen 9 am Stutzen 6 kommen können.

Ebenso kann durch Verbiegung der Lappen 13 in axialer Richtung ein gewisses Führungsspiel in den Führungsöffnungen 9 eingestellt werden, und schließlich können die Führungslappen 13 auch mit Hilfe eines geeigneten Werkzeugs angeschrägt werden, um so das Winkelverdrehspiel in der Führungsöffnung 9 zu vergrößern.

Ebenso können die Führungslappen 13 in axialer Richtung so weit in die lichte Weite der Stecköffnung einwärts gebogen werden, dass sie federnd an der Bodenfläche 12 unter Überwindung des Freiraume 14 anstehen, so dass damit eine in Öffnungsrichtung federbelastete Steckverbindung zwischen dem Stutzen 6 und dem Steckteil 1 gegeben ist.

### Zeichnungs-Legende

- 1: Steckteil
- 2: Außenhülse
- 3: Innenhülse
- 4: Aufnahmeraum
- 5: Rastfeder
- 6: Stutzen
- 7: Rastschräge
- 8: Rastkante
- 9: Führungsöffnung
- 10: Einführschräge
- 11: Führungskante
- 12: Bodenfläche
- 13: Führungslappen
- 14: Freiraum
- 15: Ringbund

## Patentansprüche

1. Steckverbindung mit Winkelarretierung für den Anschluss von Rohr- und Schlauchleitungen, welche ein Steckteil (1), an dem die Rohr- und Schlauchleitung (3) befestigt ist und einen Stutzen (6) aufweist, wobei zwischen dem Steckteil (1) und dem Stutzen (6) eine in axialer Richtung wirkende Verschiebeführung (9-15) angeordnet ist, die gegen Verdrehung in Umfangsrichtung sichert, die aus mehreren an der vorderen Stirnfläche des Steckteils (1) verteilt angeordneten und in axialer Richtung wirkenden Führungslappen (13) besteht, welche mit zugeordneten Ausnehmungen (9) am gegenüber liegenden Teil zusammen wirken und als Montagehilfe zur Sicherung der Steckverbindung gegen Einwirkung von Drehmomenten die Ausnehmungen (9) unmittelbar am Außenumfang des gegenüberliegenden Teils angeformt sind und dass die Montagehilfe nur eine bestimmte Verdrehlage zwischen den zusammenzusteckenden Teilen erlaubt, **dadurch gekennzeichnet, dass** der in den Innenraum des Steckteils (1) einzusteckende Stutzen (6) an seiner in Steckrichtung vorne liegenden Stirnseite in axiale Richtung weisende Führungsöffnungen (9) aufweist, welche in axialer Richtung geöffnet sind und dass am Steckteil (1) in axialem Abstand zu der Rastverbindung am Steckteil (1) mehrere radial einwärts in die lichte Stecköffnung hinein ragende Führungslappen (13) angeordnet sind.

2. Steckverbindung nach Anspruch 1, **dadurch gekennzeichnet, dass** die Führungslappen (13) durch Ausstanzen des Bodenmaterials am Steckteil (1) ausgebildet sind, wobei die Führungslappen (13) aus dem verbleibenden Material gebildet sind.

3. Steckverbindung nach den Ansprüchen 1 und 2, **dadurch gekennzeichnet, dass** die Oberfläche am Außenumfang des Steckteils (1) als glatte Oberfläche ausgebildet ist.

4. Steckverbindung nach den Ansprüchen 1 bis 3, **dadurch gekennzeichnet, dass** die Führungslappen (13) am Steckteil (1) mindestens in den teilweisen Eingriff mit den Führungsöffnungen (9) am Stutzen (6) angeordnet sind.

5. Steckverbindung nach den Ansprüchen 1 bis 4, **dadurch gekennzeichnet, dass** die Steckverbindung mit den in den Führungsöffnungen (9) mindestens teilweise im Eingriff angeordneten Führungslappen (13) eine drehwinkel-begrenzte Montage bildet.

6. Steckverbindung nach den Ansprüchen 1 bis 5, **dadurch gekennzeichnet, dass** der auszustanzende Boden des Steckteils (1), welcher weiterhin die radial einwärts gerichteten Führungslappen (13) bildet, Materialausnehmungen in Form einer gelochten Kontur aufweist.

7. Steckverbindung nach den Ansprüchen 1 bis 6, **dadurch gekennzeichnet, dass** die aus dem Boden des Steckteils (1) gebildeten Führungslappen (13) in unterschiedlicher Form und unterschiedlicher Dimension ausgebildet sind.

8. Steckverbindung nach den Ansprüchen 1 bis 6, **dadurch gekennzeichnet, dass** die aus dem Boden des Steckteils gebildeten Führungslappen (13) in gleicher Form und gleicher Dimension ausgebildet sind.

9. Steckverbindung nach den Ansprüchen 1 bis 7, **dadurch gekennzeichnet, dass** die Führungsöffnungen (9) im Stutzen (6) entsprechend der Form und Dimension der Führungslappen (13) im Steckteil (1) ausgebildet sind.

10. Steckverbindung nach den Ansprüchen 1 bis 7 und 9, **dadurch gekennzeichnet, dass** die Steckverbindung mit gleich ausgebildeten Führungslappen (13) am Steckteil (1) und dementsprechend gleich ausgebildeten Führungsöffnungen (9) im Stutzen (6) in einer Winkelstellung von 45°, 60° oder 90° zusammensteckbar ist.

11. Steckverbindung nach den Ansprüchen 1 bis 7, 9, 10, **dadurch gekennzeichnet, dass** die Steckverbindung eine winkellose Arretierung aufweist.

12. Steckverbindung nach den Ansprüchen 1 bis 7 und 9 bis 11, **dadurch gekennzeichnet, dass** die Steckverbindung mit einer winkellosen Arretierung aus der lichten Weite der Stecköffnung herausgebogene Führungslappen (13) aufweist.

13. Steckverbindung nach den Ansprüchen 1 bis 12, **dadurch gekennzeichnet, dass** die Steckverbindung mit einer winkellosen Arretierung eine beliebige Verdrehlage aufweist.

14. Steckverbindung nach den Ansprüchen 1 bis 7 und 9 bis 13, **dadurch gekennzeichnet, dass** der Stutzen (6) eine um seinen vorderen Stirnseitenbereich in axialer Richtung weisende Kürzung aufweist.

15. Steckverbindung nach den Ansprüchen 1 bis 7 und 9 bis 14, **dadurch gekennzeichnet, dass** der mit einer Kürzung aufweisende Stutzen (6) eine umlaufende, freiliegende Führungsöffnung (9) aufweist.

16. Steckverbindung nach den Ansprüchen 1 bis 7 und 9 bis 15, **dadurch gekennzeichnet, dass** das Steckteil (1) eine gleichbleibende Ausführung aufweist, welche für drehwinkel-begrenzte und drehwinkel-freie Steckverbindungen einsetzbar ist.

17. Steckverbindung nach den Ansprüchen 1 bis 7 und 9 bis 16, **dadurch gekennzeichnet, dass** die Führungsöffnung (9) am Stutzen (1) ein gewisses Spiel bezüglich Einführlänge und Einführkonus (10) aufweist.

## Claims

1. Plug connection with an angle lock for connecting pipe and hose lines, which has a plug part (1), to which the tube and hose line (3) is fastened, and a connection piece (6), wherein a displacement guide (9-15) acting in the axial direction is arranged between the plug part (1) and the connection piece (6), which displacement guide prevents rotation in the peripheral direction, consisting of a plurality of guide lugs (13) arranged distributed on the front end face of the plug part (1) and acting in the axial direction, which cooperate with associated recesses (9) on the opposing part, and the recesses (9) are moulded directly onto the outer periphery of the opposing part as an assembly aid to secure the plug connection against the action of torques and in that the assembly aid only allows a certain rotational position between the parts to be plugged together, **characterised in that** the connection piece (6) to be inserted into the interior of the plug part (1), on its end face located at the front in the plugging direction, has guide openings (9) pointing in the axial direction, which are opened in the axial direction, and **in that** arranged on the plug part (1) at an axial spacing from the latching connection on the plug part (1) are a plurality of guide lugs (13) projecting radially inwardly into the clear plug opening.

2. Plug connection according to claim 1, **characterised in that** the guide lugs (13) are configured by punching out the base material on the plug part (1), the guide lugs (13) being formed from the remaining material.

3. Plug connection according to claims 1 and 2, **characterised in that** the surface at the outer periphery of the plug part (1) is configured as a smooth surface.

4. Plug connection according to any one of claims 1 to 3, **characterised in that** the guide lugs (13) on the plug part (1) are arranged at least in partial engagement with the guide openings (9) on the connection piece (6).

5. Plug connection according to any one of claims 1 to 4, **characterised in that** the plug connection with the guide lugs (13) arranged at least partially in engagement with the guide openings (9) forms a rotation angle-limited assembly.

6. Plug connection according to any one of claims 1 to 5, **characterised in that** the base of the plug part (1) to be punched out, which continues to form the radially inwardly directed guide lugs (13), has material recesses in the form of a perforated contour.

7. Plug connection according to any one of claims 1 to 6, **characterised in that** the guide lugs (13) formed from the base of the plug part (1) are configured in different forms and with different dimensions.

8. Plug connection according to any one of claims 1 to 6, **characterised in that** the guide lugs (13) formed from the base of the plug part are configured in the same form and with the same dimensions.

9. Plug connection according to any one of claims 1 to 7, **characterised in that** the guide openings (9) in the connection piece (6) are configured according to the form and dimensions of the guide lugs (13) in the plug part (1).

10. Plug connection according to any one of claims 1 to 7 and 9, **characterised in that** the plug connection with identically configured guide lugs (13) on the plug part (1) and the accordingly identically configured guide openings (9) in the connection piece (6) can be plugged together at an angle position of 45°, 60° or 90°.

11. Plug connection according to any one of claims 1 to 7, 9, 10, **characterised in that** the plug connection has an angleless lock.

12. Plug connection according to any one of claims 1 to 7 and 9 to 11, **characterised in that** the plug connection with an angleless lock has guide lugs (13) bent out from the clear width of the plug opening.

13. Plug connection according to any one of claims 1 to 12, **characterised in that** the plug connection with an angleless lock has any rotational position.

14. Plug connection according to any one of claims 1 to 7 and 9 to 13, **characterised in that** the connection piece (6) has a shortened part pointing in the axial direction around its front end region.

15. Plug connection according to any one of claims 1 to 7 and 9 to 14, **characterised in that** the connection piece (6) having a shortened part has a peripheral, exposed guide opening (9).

16. Plug connection according to any one of claims 1 to 7 and 9 to 15, **characterised in that** the plug part (1) has a constant design which can be used for rotation angle-limited and rotation angle-free plug connections.

17. Plug connection according to any one of claims 1 to 7 and 9 to 16, **characterised in that** the guide opening (9) on the connection piece (6) has a certain play with regard to the introduction length and introduction cone (10).

## Revendications

1. Raccord enfichable à blocage angulaire pour le raccordement de conduites rigides et de conduites souples, qui comporte un élément de raccordement (1) auquel la conduite est fixée, et une tubulure (6), étant précisé qu'il est prévu entre l'élément de raccordement (1) et la tubulure (6) un guidage de manoeuvre (9-15) qui agit dans le sens axial, qui empêche une rotation dans le sens circonférentiel et qui se compose de plusieurs pattes de guidage (13) qui sont réparties sur la surface frontale avant de l'élément de raccordement (1), qui agissent dans le sens axial et qui coopèrent avec des creux associés (9) prévus sur l'élément opposé, que comme mécanisme auxiliaire de montage pour bloquer le raccord à l'encontre de l'action de couples, les creux (9) sont prévus directement sur la circonférence extérieure de l'élément opposé, et que ce mécanisme auxiliaire de montage ne permet qu'une position de rotation définie entre les éléments à raccorder,
**caractérisé en ce que** la tubulure (6) à introduire dans l'espace intérieur de l'élément de raccordement (1) présente sur son côté frontal dirigé vers l'avant dans le sens d'enfichage des ouvertures de guidage (9) qui sont dirigées dans le sens axial et qui sont ouvertes dans le sens axial, et **en ce qu'**il est prévu sur l'élément de raccordement (1), à une distance axiale de la liaison par enclenchement sur celui-ci, plusieurs pattes de guidage (13) qui dépassent radialement vers l'intérieur dans l'ouverture d'enfichage.

2. Raccord enfichable selon la revendication 1, **caractérisé en ce que** les pattes de guidage (13) sont formées par découpage de la matière du fond de l'élément de raccordement (1), les pattes de guidage (13) se composant de la matière qui reste.

3. Raccord enfichable selon les revendications 1 et 2, **caractérisé en ce que** la surface située sur la circonférence extérieure de l'élément de raccordement (1) est conçue comme une surface lisse.

4. Raccord enfichable selon les revendications 1 à 3, **caractérisé en ce que** les pattes de guidage (13) prévues sur l'élément de raccordement (1) sont disposées de manière à être au moins partiellement en prise avec les ouvertures de guidage (9) prévues sur la tubulure (6).

5. Raccord enfichable selon les revendications 1 à 4, **caractérisé en ce qu'**il forme avec les pattes de guidage (13) au moins partiellement en prise avec les ouvertures de guidage (9) un montage à angle de rotation limité.

6. Raccord enfichable selon les revendications 1 à 5, **caractérisé en ce que** le fond de l'élément de raccordement (1) qui doit être découpé et qui forme ensuite les pattes de guidage (13) dirigées radialement vers l'intérieur présente des évidements de matière sous la forme d'un contour perforé.

7. Raccord enfichable selon les revendications 1 à 6, **caractérisé en ce que** les pattes de guidage (13) formées à partir du fond de l'élément de raccordement (1) ont des formes et des dimensions différentes.

8. Raccord enfichable selon les revendications 1 à 6, **caractérisé en ce que** les pattes de guidage (13) formées à partir du fond de l'élément de raccordement ont des formes et des dimensions identiques.

9. Raccord enfichable selon les revendications 1 à 7, **caractérisé en ce que** les ouvertures de guidage (9) prévues dans la tubulure (6) sont conçues suivant la forme et les dimensions des pattes de guidage (13) prévues dans l'élément de raccordement (1).

10. Raccord enfichable selon les revendications 1 à 7 et 9, **caractérisé en ce qu'**il est apte à être assemblé, avec des pattes de guidage (13) identiques prévues sur l'élément de raccordement (1) et en conséquence des ouvertures de guidage (9) identiques prévues dans la tubulure (6), dans une position angulaire de 45°, 60° ou 90°.

11. Raccord enfichable selon les revendications 1 à 7, 9, 10, **caractérisé en ce qu'**il présente un blocage sans angle.

12. Raccord enfichable selon les revendications 1 à 7 et 9 à 11, **caractérisé en ce que** le raccord enfichable pourvu d'un blocage sans angle présente des pattes de guidage (13) qui sont pliées hors du diamètre intérieur de l'ouverture d'enfichage.

13. Raccord enfichable selon les revendications 1 à 12, **caractérisé en ce que** le raccord enfichable pourvu d'un blocage sans angle présente n'importe quelle position de rotation.

14. Raccord enfichable selon les revendications 1 à 7 et 9 à 13, **caractérisé en ce que** la tubulure (6) est raccourcie, dans le sens axial, de sa zone frontale avant.

15. Raccord enfichable selon les revendications 1 à 7 et 9 à 14, **caractérisé en ce que** la tubulure (6), une fois raccourcie, présente une ouverture de guidage (9) dégagée, tout autour.

16. Raccord enfichable selon les revendications 1 à 7 et 9 à 15, **caractérisé en ce que** l'élément de raccordement (1) présente un modèle identique qui est utilisable pour les raccords à angle de rotation limité et pour les raccords sans angle de rotation.

17. Raccord enfichable selon les revendications 1 à 7 et 9 à 16, **caractérisé en ce que** l'ouverture de guidage (9) prévue sur la tubulure (6) présente un certain jeu par rapport à la longueur d'introduction et au cône d'introduction (10).
